# EUROPÄISCHE PATENTSCHRIFT

(11) **EP 1 479 549 B1**
(45) Veröffentlichungstag und Bekanntmachung des Hinweises auf die Patenterteilung: **27.07.2011**
(21) Anmeldenummer: 03011409.4
(22) Anmeldetag: 20.05.2003
(51) Int. Cl.: B60H 1/22, B60H 1/34

(54) **Elektrisches Heizgerät, insbesondere für eine Fahrzeugheizung oder eine Fahrzeugklimaanlage**
Electric heating device, particularly for a heating or air-conditioning unit in a vehicle
Dispositif de chauffage électrique, notamment pour appareil de chauffage et/ou climatisation de véhicule

(43) Veröffentlichungstag der Anmeldung: 24.11.2004
(73) Patentinhaber: Behr GmbH & Co. KG, 70469 Stuttgart (DE); Behr France Rouffach SAS, 68250 Rouffach (FR)
(72) Erfinder: Burk, Roland, 70469 Stuttgart (DE); Feith, Emmanuel, 68000 Colmar (FR)

(56) Entgegenhaltungen:
- EP-A- 1 291 208
- DE-A- 10 121 904
- DE-A- 10 121 906
- FR-A- 2 798 095
- US-A- 1 366 519
- US-A- 4 616 693
- PATENT ABSTRACTS OF JAPAN vol. 006, no. 039 (M-116), 10. März 1982 (1982-03-10) & JP 56 154307 A (NIPPON SOKEN INC), 28. November 1981 (1981-11-28)

## Beschreibung

Die vorliegende Erfindung bezieht sich auf eine Vorrichtung zum Übertragen von Wärme, insbesondere für ein Kraftfahrzeug. Bei modernen Fahrzeugen mit geringem Kraftstoffverbrauch steht teilweise insbesondere im Winter zu wenig vom Motor produzierte Abwärme zur Verfügung, um den Innenraum des Fahrzeuges ausreichend zu erwärmen. Daneben erzeugt insbesondere bei Fahrtantritt im Winter der Motor noch nicht genügend Abwärme, um beispielsweise die Frontscheibe von Eis zu befreien.

Daher sind im Stand der Technik Zuheizvorrichtungen bekannt, welche unter anderem elektrische Zuheizer aufweisen. Bei in den Zuheizern eingesetzten Heizelementen handelt es sich üblicherweise um PTC-Heizelemente (Positive Temperature Coefficient).

Der Nachteil derartiger Zuheizer besteht darin, daß sie oftmals zusätzlichen Bauraum benötigen.

Daneben besteht das Erfordernis, die in den Fahrzeuginnenraum zu leitende Luft bezüglich ihrer Mengenaufteilung auf verschiedene Ausströmer zu regulieren. Dazu werden im Stand der Technik einerseits Regelelemente, wie Luftklappen oder dergleichen verwendet.

In der DE 101 21 904 A1 wird eine Belüftungsvorrichtung für Fahrzeuge vorgeschlagen, die eine Multifunktionsbaugruppe, welche aus einer Heizvorrichtung, einer Luftmengensteuereinrichtung, einem Aktuator zur Verstellung der Luftmengensteueneinrichtung, einer Lüftervorrichtung und/oder mindestens einem Aktuator zur Luftrichtungssteuereinrichtung besteht, aufweist. In einem Ausführungsbeispiel wird vorgeschlagen, eine separat ausgebildete Heizvorrichtung unmittelbar auf einer beweglich angeordneten Klappe, welche zur Beeinflussung der Luftströmung dient, anzuordnen, um so die vorbeistrelchende Luft zusätzlich zu erwärmen. Zur Vergrößerung der wärmeübertragenden Oberfläche wird in Fortführung des Ausführungsbeispiels vorgeschlagen, eine zusätzliche, schachtelartig ausgebildete Struktur im thermischen Kontakt zur Heizvorrichtung vorzusehen.

In der DE 101 21 906 A1 wird eine zur DE 101 21 904 A1 gleichartige Belüftungsvorrichtung vorgeschlagen, wobei zusätzliche Einzelheiten zur elektrischen Kontaktierung der Heizvorrichtung sowie zur Ausbildung der zusätzlichen, schachtelartig ausgebildeten, oberflächenvergrößernden Struktur angegeben sind.

In der FR 2 798 095 B1 wird eine Klimaanlage vorgeschlagen, bei der ein zusätzlicher Wärmeübertrager zur Erwärmung der durch diesen hindurchströmenden Luft vorgesehen ist. Durch eine Bewegung des zusätzlichen Heizkörpers im Klimaanlagengehäuse kann dieser in den durch die Klimaanlage hindurchströmenden Luftstrom eingebracht bzw. aus diesem entfernt werden. In einem alternativen Ausführungsbeispiel wird eine Klappenanordnung vorgeschlagen, durch die der durch die Klimaanlage hindurchströmende Luftstrom so umgelenkt werden kann, dass ein starr im Klimaanlagengehäuse angeordneter zusätzlicher Heizkörper in den Luftstrom eingebracht bzw. aus diesem entfernt werden kann.

Der Erfindung liegt die Aufgabe zugrunde, eine Vorrichtung zum Übertragen von Wärme zu schaffen, welche in einfacher Weise geregelt werden kann. Dies wird erfindungsgemäß durch eine Heizvorrichtung gemäß Anspruch 1 erreicht. Bevorzugte Ausführungsformen und Weiterbildungen sind Gegenstand der Unteransprüche. Erfindungsgemäß weist eine Vorrichtung zum Austausch von Wärme, insbesondere für ein Kraftfahrzeug, wenigstens eine erste Komponente auf, welche mit einer elektrischen Stromquelle verbunden ist, und deren Temperatur sich in Abhängigkeit eines durch die Komponente fließenden Stromes ändert, sowie wenigstens eine zweite Komponente, die mit der ersten Komponente elektrisch leitend verbunden ist. Dabei ist die erste Komponente und/oder die zweite Komponente derart beweglich angeordnet, daß eine Bewegung der ersten und/oder der zweiten Komponente wenigstens bewirkt, daß die Strömung, insbesondere Strömungsrichtung eines die Vorrichtung umströmenden Mediums, wenigstens teilweise geändert wird. Dabei ist wenigstens eine der ersten Komponenten einteilig ausgebildet und weist sowohl Wärmeerzeugende als auch Luftleitende Funktion auf.

Bei der ersten Komponente kann es sich bevorzugt um ein Material mit PTC-Eigenschaften handeln.

Bei der zweiten Komponente kann es sich beispielsweise um ein Kontaktblech handeln, welches mit der ersten Komponente in Verbindung steht. Die zweite Komponente kann bevorzugt auch in Form zweier Teileinheiten bzw. zweier Kontakte oder Kontaktbleche ausgeführt sein, welche mit dem Plusund dem Minuspol einer Spannungsquelle elektrisch verbunden werden.

Bei dem die Vorrichtung umströmenden Medium handelt es sich beispielsweise um ein gasförmiges Medium, insbesondere um Luft, welche durch die Vorrichtung erwärmt werden kann, um dann in das Fahrzeuginnere und hier beispielsweise an die Frontscheibe geleitet zu werden.

Unter der Strömungsrichtung des Mediums wird die Richtung verstanden, welche das Medium, das heißt die Luft im Bereich der Vorrichtung vorzugsweise im wesentlichen annimmt.

In einer weiteren bevorzugten Ausführungsform ist wenigstens die erste Komponente und/oder die zweite Komponente um eine vorgegebene Achse drehbar. Eine Bewegung nur einer der beiden Komponenten kann beispielsweise dadurch bewirkt werden, daß die erste und die zweite Komponente miteinander in Gleitkontakt stehen, und eine der beiden Komponenten in Ruhe bleibt, während sich die andere dieser Komponente gegenüber bewegt. Unter einer Bewegung der ersten und der zweiten Komponente wird verstanden, daß sich die wenigstens eine Komponente sowohl in Form einer Translation als auch einer Rotationsbewegung bewegt, das heißt, daß die jeweilige Komponente in wenigstens zwei unterschiedliche Raumpositionen gebracht wird.

Jedoch können auch beide Komponenten gleichzeitig bewegt werden, beispielsweise um eine gemeinsame Drehachse gedreht werden.

In einer weiteren bevorzugten Ausführungsform ist eine Vielzahl erster und/oder zweiter Komponenten vorgesehen, wobei besonders bevorzugt die ersten und zweiten Komponenten alternierend angeordnet sind.

Unter einer alternierenden Anordnung wird verstanden, daß in einer bestimmten Vorzugsrichtung auf eine erste Komponente eine zweite Komponente folgt, auf diese wiederum eine erste Komponente usw..

In einer weiteren bevorzugten Ausführungsform fördert wenigstens die zweite Komponente den Wärmeübertrag auf ein umgebendes Medium. Bevorzugt fördern die mehreren zweiten Komponenten den Wärmeübertrag auf das umgebende Medium dadurch, daß sie derart in den Luftstrom gestellt werden, daß die an ihnen vorbeiströmende Luft durch die erhöhte Wärme der zweiten Komponenten ebenfalls erwärmt wird.

In einer Ausführungsform erfüllt dabei eine der beiden Komponenten die Funktion einer Luftklappe, welche, wenn diese Komponente um eine Achse gedreht wird, bewirkt, daß ein Luftstrom entweder an ihr vorbeiströmen kann oder blockiert wird.

In einer weiteren bevorzugten Ausführungsform wird die Vielzahl der zweiten Komponenten alternierend mit Strom beaufschlagt. Dies ist dahingehend zu verstehen, daß jeweils abwechselnd eine Komponente mit dem Pluspol, und die jeweils zweite mit dem Minuspol einer Spannungs- bzw. Stromquelle verbunden wird. Bevorzugt findet sich dann zwischen zwei derartigen Komponenten eine erste Komponente, welche sich aufgrund des Stromflusses erwärmen kann.

In einer weiteren bevorzugten Ausführungsform ist wenigstens die erste und/oder die zweite Komponente in wenigstens zwei Stellungen verdrehbar, wobei in einer Stellung im wesentlichen der Durchgang von Luft durch die Vorrichtung verhindert wird. Die Vorrichtung ist dabei beispielsweise in einem Luftschacht angeordnet. In einer der beiden Drehstellungen wird dieser Luftschacht bevorzugt im wesentlichen vollständig von einer der beiden Komponenten blockiert.

In einer weiteren bevorzugten Ausführungsform ist die erste und/oder die zweite Komponente um einen Winkel von 0° bis 360°, bevorzugt von 0° bis 180° und besonders bevorzugt um einen Winkel von 0° bis 90° drehbar.

In einer weiteren bevorzugten Ausführungsform ist die erste Komponente als langgestrecktes Element ausgeführt, wobei besonders bevorzugt zwischen den zweiten Komponenten mehrere erste Komponenten, insbesondere als langgestreckte Elemente vorgesehen sind, und besonders bevorzugt die zweite Komponente, bzw. die Vielzahl der zweiten Komponenten als Platten ausgeführt sind.

Unter einem langgestreckten Element wird jede geometrische Raumform verstanden, deren Ausdehnung in einer Raumrichtung die Ausdehnungen in anderen, zur erstgenannten im wesentlichen senkrechten Raumrichtungen übertrifft. Beispiele für langgestreckte Elemente wären zum Beispiel Balken oder Stangen.

In dieser Ausführungsform ist zwischen zwei zweiten Komponenten in Form von Platten eine erste Komponente vorgesehen. Es könnten jedoch auch mehrere erste Komponenten in Form mehrerer langgestreckter Elemente, beispielsweise parallel aber auch in anderer Anordnung zueinander vorgesehen sein. Eine derartige Anordnung könnte zur Stabilisierung der kompletten Vorrichtung dienen. Dabei kann die Vorrichtung so aufgebaut sein, daß nur das eine, bzw. nur eines der langgestreckten Elemente, eine PTC-Funktion aufweist, oder auch mehrere oder auch alle der langgestreckten Elemente.

Die die zweiten Komponenten bildenden Platten können dabei im Prinzip eine beliebige geometrische Struktur aufweisen. Besonders bevorzugt weisen die zweiten Komponenten eine im wesentlichen kreisförmige oder halbkreisförmige Gestalt auf.

Dies hat den Vorteil, daß im Falle einer Drehung der ersten und zweiten Komponenten um eine vorgegebene Achse ein besonders günstiger Wärmeaustausch mit der umgebenden Luft erreicht werden kann. Bevorzugt ist die Drehachse für die erste und/oder zweite Komponente gleichzeitig im wesentlichen die Symmetrieachse für wenigstens die erste und/oder die zweite Komponente.

Ist beispielsweise die zweite Komponente als kreisförmige Platte ausgeführt, so bedeutet dies, daß die Drehachse durch deren Mittelpunkt verläuft. Falls die erste Komponente als langgestreckter Körper ausgeführt ist, würde in diesem Fall die Drehachse durch dessen Längsmittelpunkt verlaufen.

Es ist jedoch auch möglich, dass die Drehachse nicht mit der geometrischen Symmetrieachse zusammenfällt.

Bevorzugt übersteigt die Länge wenigstens einer ersten Komponente den Durchmesser wenigstens einer zweiten Komponente geringfügig. Auf diese Weise kann bewirkt werden, daß in einer bestimmten Drehstellung der ersten Komponente der Durchgang von Luft im wesentlichen behindert wird.

In einer weiteren bevorzugten Ausführungsform umgibt die erste Komponente die zweite Komponente wenigstens teilweise. Unter teilweise umgeben wird dabei verstanden, daß ein bestimmtes Flächensegment einer insbesondere plattenförmigen zweiten Komponente vollständig umgeben wird, das heißt sowohl auf einer Vorderseite dieser Platte, als auch der Rückseite der Platte, als auch den jeweiligen Umfangsrandbereichen. Dies wird später im Zusammenhang mit den Figuren genauer erläutert.

In einer weiteren Ausführungsform ist eine Halteinrichtung vorgesehen, welche wenigstens die zweiten Komponenten gegeneinander stabilisiert. Dies kann beispielsweise dadurch bewerkstelligt werden, daß im Umfang mehrere, vorzugsweise aller zweiten Komponenten, eine Verbindung angebracht wird, welche vorzugsweise auch einteilig mit der ersten Komponente ausgebildet werden kann, was später im Hinblick auf die Figuren genauer erläutert wird.

Bevorzugt ist daher auch, daß die Halteeinrichtung mit wenigstens einer ersten Komponente, bevorzugt mit einer Vielzahl der ersten Komponenten, besonders bevorzugt mit im wesentlichen allen ersten Komponenten im wesentlichen formschlüssig in Verbindung steht.

Es ist jedoch auch möglich, daß in einer bevorzugten Ausführungsform die erste Komponente eine im wesentlichen scheibenförmige Struktur aufweist, und die zweite Komponente eine im wesentlichen plattenförmige Struktur. Dieser Sachverhalt wird später anhand der Figuren genauer dargestellt. Es sei jedoch erwähnt, daß bei einer derartigen Ausführungsform, insbesondere die zweite Komponente dafür vorgesehen sein kann, in einer bestimmten Drehstellung dieser Komponente einen Durchgang von Luft im wesentlichen vollständig zu verhindern.

In einer weiteren bevorzugten Ausführungsform ist eine dritte Komponente vorgesehen, welche bezüglich der Drehachse vorzugsweise zwischen den mehreren zweiten Komponenten angeordnet ist. Hierbei kann es sich beispielsweise um eine Drehluftklappe handeln, welche um eine vorgegebene Achse gedreht wird, welche in einer Stellung einen Durchgang von Luft erlaubt, und in einer zweiten Stellung einen Durchgang von Luft im wesentlichen verhindert. Dabei können in einer bevorzugten Ausführungsform im wesentlichen halbkreisförmige zweite Komponenten an dieser Luftklappe sowohl an der Oberseite als auch an der Unterseite angebracht sein.

In einer weiteren Ausführungsform weist wenigstens eine Komponente wenigstens eine Oberfläche auf, deren Struktur zur Veränderung insbesondere zur Erhöhung der Turbulenz geeignet ist. Dabei kann es sich beispielsweise um an einer oder an mehreren Seiten wenigstens einer der Komponenten angebrachte Finnen oder Fahnen, Rillen, Kiemen oder dergleichen handeln, welche die Turbulenz mit der umgebenden Luft erhöhen.

In einer bevorzugten Ausführungsform könnten auch zwischen zwei zweiten Komponenten beispielsweise in Form von zwei kreis- oder halbkreisförmige Platten Wellrippen angeordnet sein, welche den Wärmeaustausch mit der umgebenden Luft erhöhen. Dabei müßten jedoch die jeweils anliegenden zweiten Komponenten bevorzugt auf dem gleichen elektrischen Potential liegen.

Auch dieser Sachverhalt wird unter Bezugnahme auf die nachfolgenden Figuren eingehender erläutert.

In einer weiteren bevorzugten Ausführungsform ist eine Antriebseinrichtung, insbesondere ein Stellmotor, vorgesehen, welcher eine Drehung der wenigstens ersten und/oder zweiten Komponente um ihre Drehachse bewirkt.

In einer weiteren bevorzugten Ausführungsform ist die vorgegebene Achse bezüglich wenigstens einer Komponente nicht die Symmetrieachse. So könnte beispielsweise die Drehachse nicht zentrisch auf den kreisförmigen Platten der zweiten Komponente oder außerhalb des Mittelpunkts des langgestreckten Körpers angebracht sein. In diesen Fällen könnte vorzugsweise die Vorrichtung in einem gebogenen Abschnitt eines Luftströmungskanals angeordnet sein.

Die Erfindung ist ferner auf einem Luftströmungskanal, insbesondere für ein Kraftfahrzeug, gerichtet, der eine Vorrichtung zur Übertragung von Wärme gemäß der vorliegenden Erfindung aufweist. Besonders bevorzugt weist dieser Luftströmungskanal die Vorrichtung zur Übertragung von Wärme gemäß der vorliegenden Erfindung in einem Ausgangsbereich des Luftströmungskanals auf. Unter einem Ausgangsbereich wird dabei der Endbereich des Luftströmungskanals aufgefaßt, nach dessen Verlassen die Luft in den Fahrzeuginnenraum eintritt.

Weitere Vorteile der erfindungsgemäßen Vorrichtung sowie Ausführungsbeispiele ergeben sich aus den nachfolgenden Figuren.

Darin zeigen:
- Fig. 1: eine schematische Darstellung einer erfindungsgemäßen Vorrichtung zur Übertragung von Wärme;
- Fig. 2: eine erfindungsgemäße Vorrichtung zur Übertragung von Wärme in einer weiteren Ausführungsform;
- Fig. 3: die Vorrichtung aus Fig. 2 in einer alternativen Drehstellung;
- Fig. 4: eine schematische Ansicht der Vorrichtung aus Fig. 2 zur Darstellung der Kontaktierung;
- Fig. 5: eine schematische Darstellung einer erfindungsgemäßen Vorrichtung zur Übertragung von Wärme in einer weiteren Ausführungsform;
- Fig. 6: eine Darstellung einer Vorrichtung zur Übertragung von Wärme, die nicht zur Erfindung gehört;
- Fig. 7: eine Darstellung einer zweiten Komponente der Vorrichtung zur Übertragung von Wärme, die nicht zur Erfindung gehört;
- Fig. 8: eine Darstellung zweier zweiter Komponenten einer Vorrichtung zur Übertragung von Wärme, die nicht zur Erfindung gehört;
- Fig. 9: eine weitere Darstellung einer Vorrichtung zur Übertragung von Wärme mit in den Figuren 7 und 8 gezeigten zweiten Komponenten, die nicht zur Erfindung gehört;
- Fig. 10: eine Darstellung einer Vorrichtung zur Übertragung von Wärme mit den zweiten Komponenten aus Fig. 7 und 8, die nicht zur Erfindung gehört;
- Fig. 11: eine weitere Darstellung der Vorrichtung aus Fig. 10;
- Fig. 12: eine weitere Ansicht der Vorrichtung aus Fig. 11;
- Fig. 12a: eine Detailansicht der Vorrichtung aus Fig. 12;
- Fig. 13: eine weitere Darstellung einer erfindungsgemäßen Vorrichtung zur Übertragung von Wärme; und
- Fig. 14: eine Draufsicht auf die Vorrichtung zur Übertragung von Wärme aus Fig. 13.

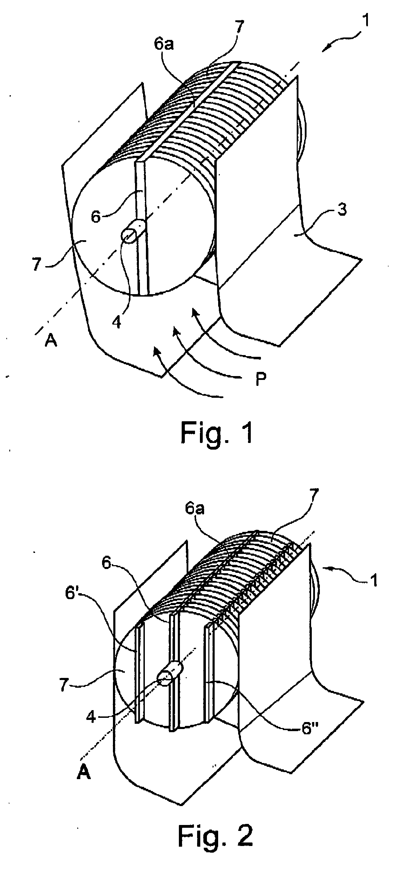

Fig. 1 zeigt eine erfindungsgemäße Vorrichtung zur Übertragung von Wärme 1 in einer ersten Ausführungsform. Das Bezugszeichen 3 kennzeichnet eine Begrenzungswand, welche beispielsweise Bestandteil eines Lüftungsrohrs bzw. Luftkanals sein kann, in welches die erfindungsgemäße Vorrichtung eingebaut ist. Pfeile P kennzeichnen die Strömungsrichtung des umgebenden Mediums, das heißt der Luft.

Das Bezugszeichen A kennzeichnet eine geometrische Achse, um welche die Vorrichtung 1 gelagert ist. Das Bezugszeichen 4 kennzeichnet einen Aufhängungspunkt, in welchem die Vorrichtung beispielsweise gelagert sein kann. Das Bezugszeichen 6 kennzeichnet eine erste Komponente, das Bezugszeichen 7 eine zweite Komponente. In dieser Ausführungsform ist eine Vielzahl von ersten Komponenten und zweiten Komponenten jeweils alternierend in Richtung zu der geometrischen Achse A angeordnet. Bevorzugt werden bei dieser Ausführungsform die einzelnen zweiten Komponenten von der ersten Komponente zumindest in einer senkrecht zur geometrischen Achse liegenden Richtung angespritzt, so dass ein Bereich 6a der ersten Komponente geringfügig größer ist als der Durchmesser der jeweils kreisförmigen zweiten Komponente. Dabei werden in einer bevorzugten Ausführungsform die zweiten Komponenten parallel in vorgegebenen Abständen zueinander angeordnet und in den Abständen die jeweils erste langgestreckte Komponente angespritzt, wobei die erste Komponente bevorzugt geringfügig länger sind als der Durchmesser der zweiten Komponente und ein Anspritzen bevorzugt auch am Außenumfang der zweiten Komponente stattfindet. Die erste Komponente ist hier ein PTC-Element. Die (nicht gezeigte) Stromzuführung erfolgt bevorzugt jeweils alternierend über die einzelnen zweiten Komponenten 7, das heißt jede in Richtung der geometrischen Achse zweite Komponente 7 ist mit dem Pluspol einer Stromquelle verbunden, die jeweils dazwischenliegenden zweiten Komponenten 7 jeweils mit dem Minuspol einer Stromquelle.

In Fig. 2 ist eine weitere Ausführungsform einer erfindungsgemäßen Vorrichtung zur Übertragung von Wärme dargestellt. Der Unterschied zu der Ausführungsform aus Fig. 1 besteht darin, dass nunmehr zwischen den einzelnen zweiten Komponenten 7 nicht nur eine erste Komponente 6 vorgesehen ist, sondern im wesentlichen parallel dazu zwei weitere (erste) Komponenten 6' und 6". Auf diese Weise kann einerseits eine höhere Stabilität der gesamten Vorrichtung und andererseits eine günstigere Wärmeübertragung gewährleistet werden. Die weiteren (ersten) Komponenten 6' und 6" müssen jedoch nicht notwendigerweise als PTC-Elemente ausgeführt sein und auch nicht notwendigerweise parallel zu der ersten Komponente 6 verlaufen.

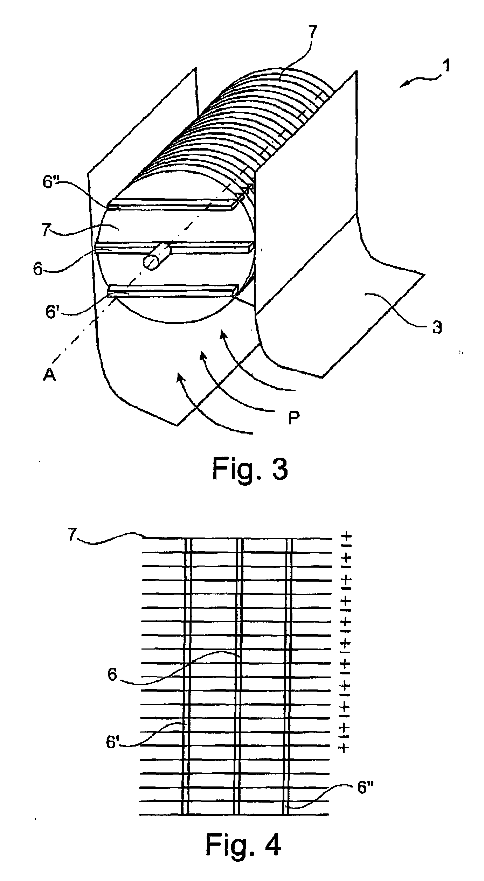

Fig. 3 zeigt die erfindungsgemäße Vorrichtung zur Übertragung von Wärme aus Fig. 2, jedoch in einer geänderten Drehstellung um die geometrische Achse A. Gegenüber der Darstellung aus Fig. 2 wurde die Vorrichtung um 90 Grad gedreht. Die drei zweiten Komponenten 6, 6' und 6" stehen nunmehr in der Darstellung waagerecht. Dies führt dazu, dass die eintretende, durch den Pfeil P gekennzeichnete Luft nicht mehr an den ersten Komponenten 6 vorbeiströmen kann und damit nicht nach oben aus dem Gehäuse austreten kann. Die Luftzufuhr ist damit blockiert.

Bevorzugt kann die Vorrichtung auch in beliebige Zwischenstellungen gebracht werden, so dass der Luftstrom im wesentlichen stufenlos gesteuert und/oder geregelt werden kann.

Fig. 4 zeigt eine schematische Darstellung der Vorrichtung aus Fig. 3 zur Veranschaulichung der Kontaktierung der zweiten Komponenten. Das Bezugszeichen 7 bezeichnet wiederum eine der zweiten Komponenten und die Bezugszeichen 6, 6' und 6" die jeweils ersten Komponenten. Wie in Fig. 4 gezeigt ist, sind die einzelnen zweiten Komponenten 7 jeweils alternierend mit dem Plus- bzw. dem Minuspol einer Stromquelle zugeordnet.

Es ist jedoch auch möglich, mehrere nebeneinanderliegende erste und/oder zweite Komponenten gemeinsam mit einem Pol einer Spannungsquelle zu verbinden.

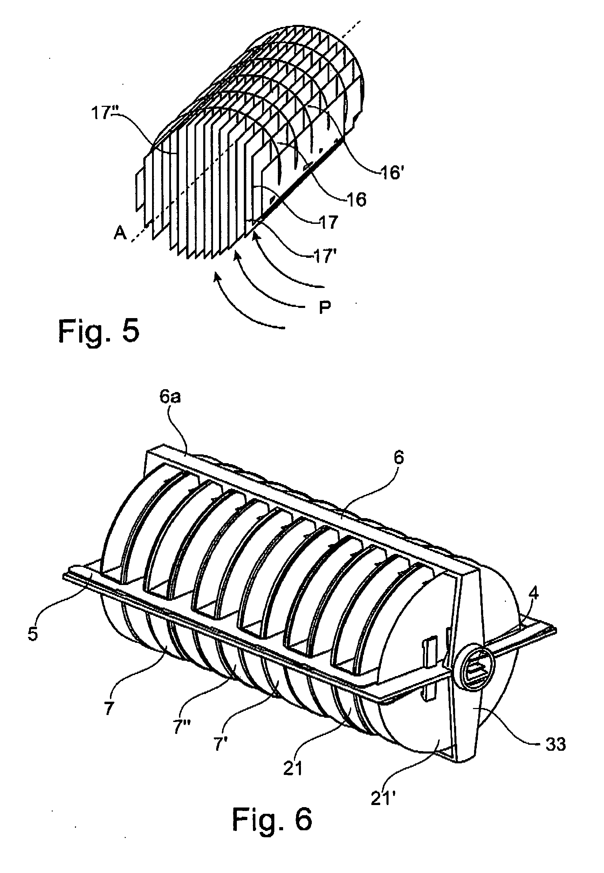

In Fig. 5 ist eine erfindungsgemäße Vorrichtung zur Übertragung von Wärme in einer weiteren Ausführungsform dargestellt. Im Unterschied zu den vorhergehenden Ausführungsformen ist hier die erste Komponente 16 im wesentlichen kreisförmig ausgeführt, und die zweiten Komponenten sind jeweils zwischen den einzelnen ersten Komponenten in Form von (hier vertikal gezeigten) Platten 17, 17' dargestellt. Auch in dieser Ausführungsform wird die Vorrichtung um eine Achse A gedreht.

In der hier gezeigten Stellung kann der Luftstrom, der durch den Pfeil P angedeutet ist, durch die Vorrichtung hindurchdringen. Wird die Vorrichtung hingegen um 90 Grad gedreht, blockieren die zweiten Komponenten - und dabei insbesondere die längste Komponente 17'; durch welche die Achse A verläuft - den Luftstrom. Dabei werden die in den Figuren 1-3 gezeigten Begrenzungswände nicht dargestellt.

In Fig. 6 ist eine Vorrichtung zur Übertragung von Wärme zur Veranschaulichung der Ausführung gezeigt. Die Vorrichtung weist eine Vielzahl von zweiten Komponenten 7 auf, wobei die Komponenten 7', die mit einem Pol der Stromquelle verbunden sind, gegenüber denjenigen zweiten Komponenten 7", die mit dem anderen Pol der Stromquelle verbunden sind, unterschiedlich dargestellt wurden. Die einzelnen ersten Komponenten sind jeweils zwischen zwei zweiten Komponenten, welche mit unterschiedlichen Polen an der Spannungsquelle verbunden sind, angeordnet und in dieser Darstellung nicht sichtbar. Die Vorrichtung weist ferner eine hier waagerecht angeordnete dritte Komponente, wie beispielsweise eine Luftklappe, auf. Diese Klappe bewirkt bei der in Fig. 6 gezeigten Ausführungsform eine Blokkierung des Luftstroms bzw. eine Öffnung, wenn die Klappe um den vorgegebenen Winkel, insbesondere um im wesentlichen 90 Grad, gedreht wird. Die dritte Komponente dient außerdem zur Fixierung der zweiten Komponenten. Dies wird in der hier gezeigten Ausführungsform durch Halteelemente 21 und 21' bewerkstelligt. Die Stromzuführung erfolgt, wie unten erläutert werden wird, über die Kontaktstellen 31 und 33. Dies bedeutet, dass die Abdichtfunktion einerseits und die Heizfunktion andererseits durch unterschiedliche Komponenten verwirklicht werden.

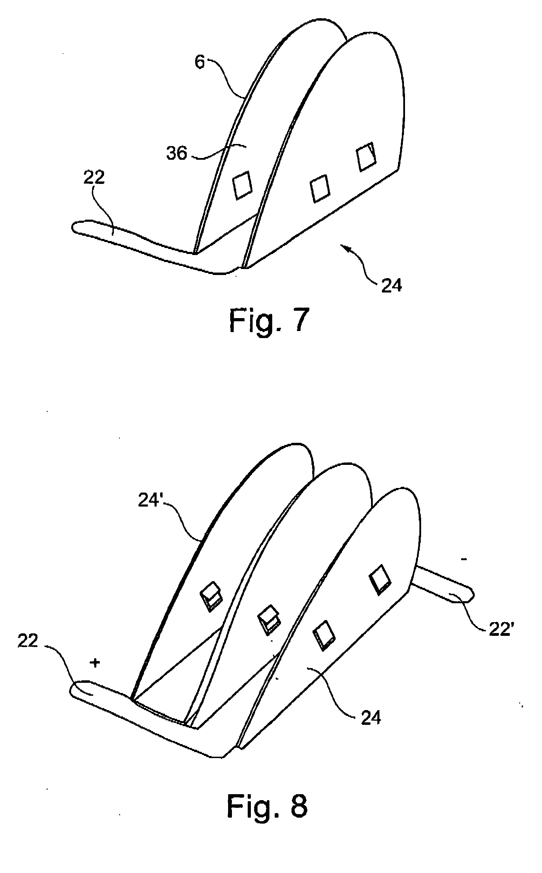

Fig. 7 zeigt eine Detaildarstellung einer zweiten Komponente aus Fig. 6. Die zweite Komponente 24 weist einen Kontaktstreifen 22 auf, der wiederum elektrisch mit einem Pol (dem Pluspol oder dem Minuspol) einer Spannungsquelle verbunden wird. Die zweite Komponente kann auf der dritten Komponente 5, wie in Fig. 6 gezeigt, befestigt werden. Zur Erzeugung von Turbulenzen kann die zweite Komponente Fahnen, Oberflächen, Strukturen oder dergleichen (nicht gezeigt) aufweisen. Die Öffnung 36 dient dazu, eine Verbindung in der ersten Komponente 7 herzustellen oder an Halteelemente anzubringen.

Fig. 8 zeigt eine Verbindung aus zwei ersten Komponenten, wobei beide erste Komponenten Kontaktstreifen 22 und 22' aufweisen, welche mit unterschiedlichen Polen einer Spannungsquelle, das heißt, dem Pluspol und dem Minuspol, verbunden werden. Zwischen diesen beiden zweiten Komponenten 24 und 24' ist eine erste Komponente (nicht gezeigt) vorgesehen. Beim Zusammenbau werden die zweiten Komponenten 24 und 24' jeweils alternierend geschaltet, wobei die Kontakte 22 der zweiten Komponenten 24 jeweils aus der gleichen Seite hervorragen und daher in zusammengebautem Zustand, beispielsweise durch Nieten, in elektrisch leitenden Kontakt miteinander gebracht werden können.

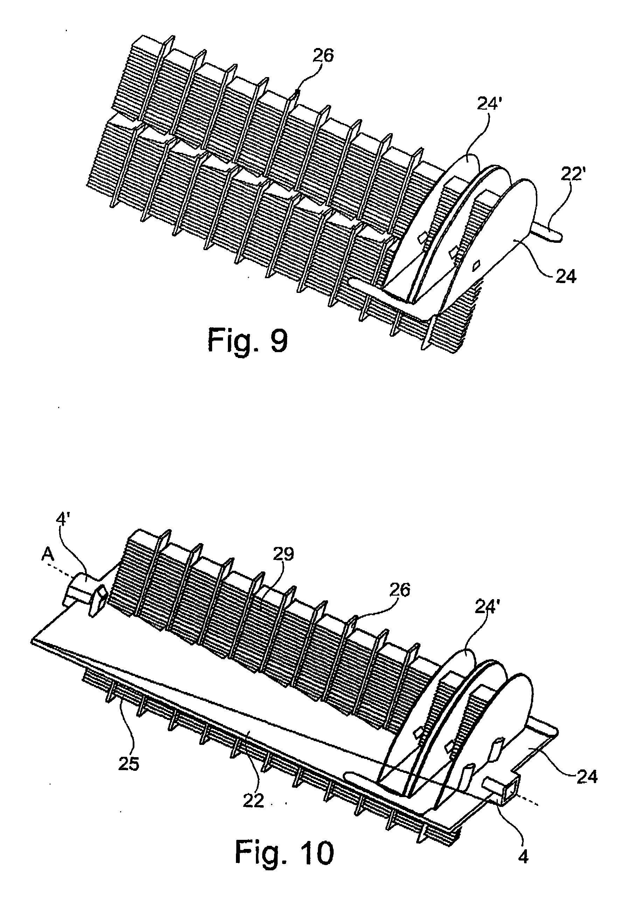

Fig. 9 zeigt einen Ausschnitt aus einer Vorrichtung zur Übertragung von Wärme gemäß der vorliegenden Erfindung, wobei die Anordnung der beiden Kontaktflächen 24 und 24' aus Fig. 8 mit dargestellt ist. Zur Klarstellung sei hier angemerkt, dass sich das Bezugszeichen 24' genau genommen in der Figur auf zwei Bestandteile der zweiten Komponente, das heißt halbkreisförmige Scheiben, bezieht, welche jedoch mit dem gleichen Pol der Spannungsquelle verbunden sind. Das gleiche gilt für die Bezugszeichen 24. Zwischen diesen beiden Bestandteilen sind bevorzugt Wellrippen 29 angeordnet, welche daher keinen Kurzschluss erzeugen können. Das Bezugszeichen 26 bezieht sich auf die erste Komponente, die wie oben ausgeführt zwischen zwei zweiten Komponenten vorgesehen ist, welche mit unterschiedlichen Polen einer Spannungsquelle verbunden ist.

Fig. 10 zeigt eine weitere Detailansicht aus Fig. 9. Im Unterschied zu Fig. 9 wurde hier die dritte Komponente 25 mit eingezeichnet, welche je nach Drehstellung der Vorrichtung bewirkt, dass der Luftstrom entweder blockiert oder durchgelassen wird. Bevorzugt ist diese dritte Komponente 25 etwas breiter als der Durchmesser einer zweiten Komponente 24. Ebenfalls eingezeichnet ist die Drehachse A, um welche die Vorrichtung gedreht wird sowie die Drehpunkte 4 und 4', an welchen die Vorrichtung gelagert ist. Diese Drehpunkte 4 und 4' weisen weiterhin die Kontakte für die Bestromung der Vorrichtung auf, wie unten noch erläutert wird.

In einer bevorzugten Ausführungsform ist ein Verstellmotor oder eine hier nicht weiter ausgeführte Verstellkinematik vorgesehen, an welche die Klappe angelenkt wird.

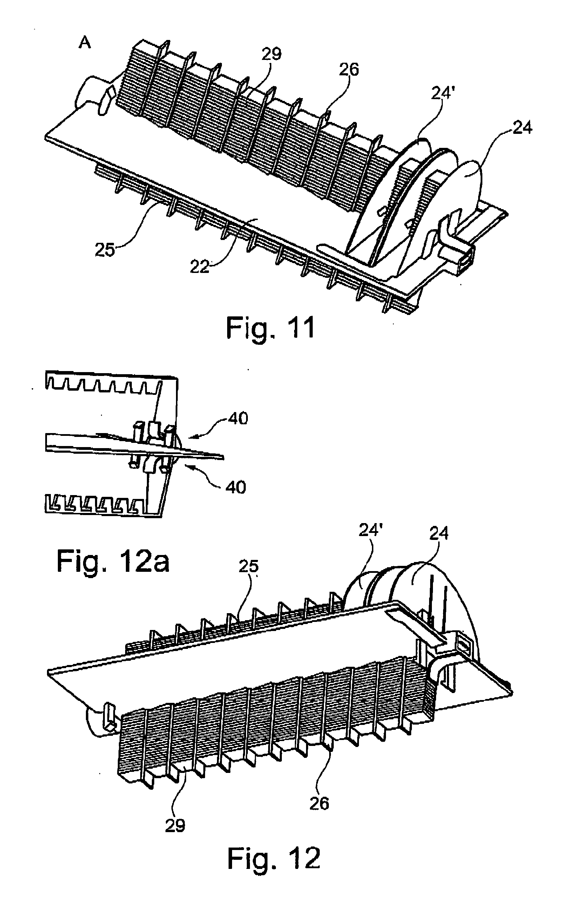

Fig. 11 zeigt eine weitere Darstellung der erfindungsgemäßen Vorrichtung, wobei hier im Gegensatz zur Darstellung aus Fig. 10 der Blick ins Innere eines der Lagerpunkte 4 freigegeben wurde. Man erkennt, dass die einzelnen Kontaktstellen 22 zu einem der axialen Steckkontakte 4 geführt werden, wobei sich der Steckkontakt, wie ausgeführt, im wesentlichen auf der geometrischen Drehachse der Vorrichtung befindet.

Fig. 12 zeigt eine Ansicht der Darstellung aus Fig. 11 von unten, Fig. 12a eine Detailansicht der Kontaktstelle 4. Fig. 12 zeigt wieder die beiden Kontaktstellen, welche zur Bestromung der Vorrichtung dienen. Wie in Fig. 12a gezeigt, dienen die Kontaktstellen 40 dazu, die zweiten Komponenten 24 mit dem Pluspol einer Spannungs- bzw. Stromquelle zu verbinden.

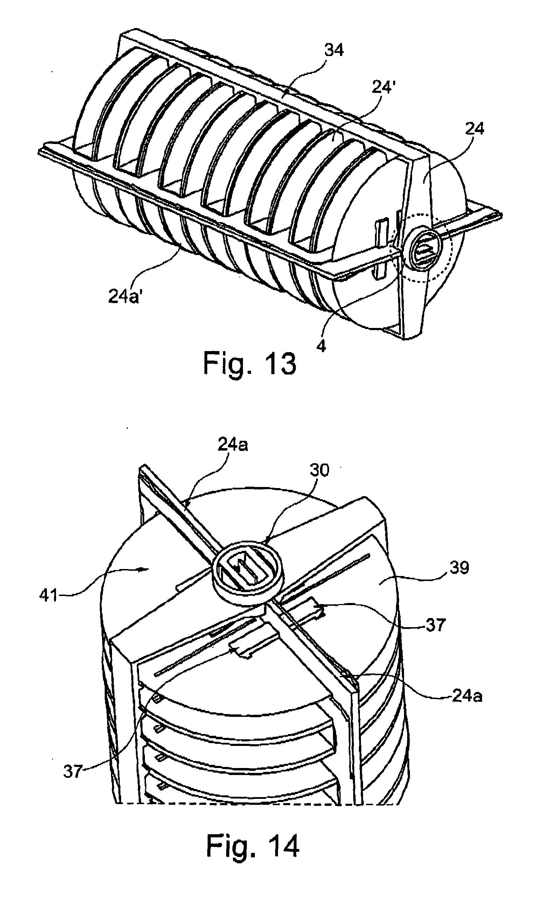

Fig. 13 zeigt eine weitere Darstellung zur Veranschaulichung der Bestromung der Vorrichtung. Der Anschluss 4 weist in dieser Ausführungsform zwei Anschlüsse für den Pluspol und einen Anschiuss für den Minuspol auf, wobei der Anschluss für den Minuspol zwischen den beiden Anschlüssen für den Pluspol angeordnet ist. Ein Gestell 34 dient zur Stabilisierung der Vorrichtung.

Fig. 14 zeigt eine Draufsicht auf die Vorrichtung entlang der in Fig. 13 durch die gepunktete Kreislinie 40 gezeigte Fläche. Das Bezugszeichen 37 bezieht sich auf zwei Blöcke, welche auf die dritte Komponente 5 geklebt bzw. befestigt werden und die andererseits auch mit einer Komponente 24a verbunden sind. In dieser Darstellung sind der Minuskontakt 39 und die beiden Pluskontakte 41 dargestellt.

## Patentansprüche

1. Vorrichtung zur Erwärmung der Kabinenluft eines Kraftfahrzeugs umfassend
eine erste Komponente (6,6',6"), welche mit einer elektrischen Stromquelle verbunden ist, und deren Temperatur sich In Abhängigkeit eines durch die Komponente (6,6',6") fließenden Stromes änderbar ist und eine zweite Komponente (7) zum Halten der ersten Komponente (6,6',6"), die mit der ersten Komponente (6,6',6")verbunden ist, wobei die erste Komponente (6,6',6") derart beweglich angeordnet ist, dass durch eine Bewegung der ersten Komponente (6,6',6") die Strömungsrichtung eines innerhalb der Vorrichtung strömenden Mediums (P) wenigstens teilweise änderbar ist, wobei die erste Komponente (6,6',6") und die zweite Komponente (7) um eine vorgegebene Achse (A) drehbar sind, wobei die erste Komponente (6,6',6") in wenigstens zwei Stellungen verdrehbar ist, **dadurch gekennzeichnet, dass** in einer Stellung der Durchgang des Mediums (P) durch die Vorrichtung (1) verhinderbar ist, wobei die erste Komponente (6,6',6") und die zweite Komponente (7) elektrisch leitend verbunden sind.

2. Vorrichtung zur Übertragung von Wärme nach wenigstens einem der vorhergegangenen Ansprüche, **dadurch gekennzeichnet, dass** eine Vielzahl erster und/oder zweiter Komponenten (7) vorgesehen ist.

3. Vorrichtung zur Übertragung von Wärme nach wenigstens einem der vorhergegangenen Ansprüche, **dadurch gekennzeichnet, dass** die ersten (6, 6', 6") und zweiten Komponenten (7) alternierend angeordnet sind.

4. Vorrichtung zur Übertragung von Wärme nach wenigstens einem der vorhergegangenen Ansprüche, **dadurch gekennzeichnet, dass** die wenigstens eine zweite Komponente (7) den Wärmeaustausch mit einem umgebenden Medium (P), insbesondere mit Luft, fördert.

5. Vorrichtung zur Übertragung von Wärme nach wenigstens einem der vorhergegangenen Ansprüche, **dadurch gekennzeichnet, dass** die Vielzahl der zweiten Komponenten (7) alternierend mit elektrischem Strom beaufschlagt wird.

6. Vorrichtung zur Übertragung von Wärme nach wenigstens einem der vorhergegangenen Ansprüche, **dadurch gekennzeichnet, dass** wenigstens die erste (6, 6', 6") und/oder die zweite (7) Komponente in wenigstens zwei Stellungen verdrehbar ist, wobei in einer Stellung im wesentlichen der Durchgang von Luft (P) durch die Vorrichtung (1) verhindert wird.

7. Vorrichtung zur Übertragung von Wärme nach wenigstens einem der vorhergegangenen Ansprüche, **dadurch gekennzeichnet, dass** die erste Komponente (6, 6', 6") um einen Winkel von 0 Grad bis 180 Grad, bevorzugt von 0 Grad bis 120 Grad und besonders bevorzugt um einen Winkel von 0 Grad bis 90 Grad drehbar ist.

8. Vorrichtung zur Übertragung von Wärme nach wenigstens einem der vorhergegangenen Ansprüche, **dadurch gekennzeichnet, dass** die erste Komponente (6, 6', 6") als langgestrecktes Element ausgeführt ist.

9. Vorrichtung zur Übertragung von Wärme nach wenigstens einem der vorhergegangenen Ansprüche, **dadurch gekennzeichnet, dass** zwischen den zweiten Komponenten (7) mehrere erste Komponenten (6, 6', 6"), - insbesondere als langgestreckte Elemente - vorgesehen sind.

10. Vorrichtung zur Übertragung von Wärme nach wenigstens einem der vorhergegangenen Ansprüche, **dadurch gekennzeichnet, dass** die zweite Komponente (7) bzw. die Vielzahl der zweiten Komponenten (7) plattenförmig ausgeführt sind.

11. Vorrichtung zur Übertragung von Wärme nach wenigstens einem der vorhergegangenen Ansprüche, **dadurch gekennzeichnet, dass** die zweiten Komponenten (7) eine im wesentlichen kreisförmige oder halbkreisförmige Gestalt aufweisen.

12. Vorrichtung zur Übertragung von Wärme nach wenigstens einem der vorhergegangenen Ansprüche, **dadurch gekennzeichnet, dass** die Drehachse (A) gleichzeitig im wesentlichen Symmetrieachse (A) für wenigstens die erste (6, 6', 6") und/oder die zweite Komponente (7) ist.

13. Vorrichtung zur Übertragung von Wärme nach wenigstens einem der vorhergegangenen Ansprüche, **dadurch gekennzeichnet, dass** die Länge wenigstens einer ersten Komponente (6, 6', 6") den Durchmesser wenigstens einer zweiten Komponente (7) geringfügig übersteigt.

14. Vorrichtung zur Übertragung von Wärme nach wenigstens einem der vorhergegangenen Ansprüche, **dadurch gekennzeichnet, dass** die erste Komponente (6, 6', 6") die zweite Komponente (7) wenigstens teilweise umgibt.

15. Vorrichtung zur Übertragung von Wärme nach wenigstens einem der vorhergegangenen Ansprüche, **dadurch gekennzeichnet, dass** eine Halteeinrichtung (4) vorgesehen ist, welche wenigstens die zweiten Komponenten (7) gegeneinander stabilisiert.

16. Vorrichtung zur Übertragung von Wärme nach wenigstens einem der vorhergegangenen Ansprüche, **dadurch gekennzeichnet, dass** die Halteeinrichtung (4) einteilig mit wenigstens einer ersten Komponente (6, 6', 6"), bevorzugt mit einer Vielzahl der ersten Komponenten und besonders bevorzugt mit im wesentlichen allen ersten Komponenten verbunden ist.

17. Vorrichtung zur Übertragung von Wärme nach wenigstens einem der vorhergegangenen Ansprüche, **dadurch gekennzeichnet, dass** die erste Komponente (6, 6', 6") eine im wesentlichen scheibenförmige Struktur aufweist.

18. Vorrichtung zur Übertragung von Wärme nach wenigstens einem der vorhergegangenen Ansprüche, **dadurch gekennzeichnet, dass** die zweite Komponente (7) eine im wesentlichen plattenförmige Struktur aufweist.

19. Vorrichtung zur Übertragung von Wärme nach wenigstens einem der vorhergegangenen Ansprüche, **dadurch gekennzeichnet, dass** eine dritte Komponente (29) vorgesehen ist, welche bezüglich der Drehachse (A) vorzugsweise zwischen den mehreren zweiten Komponenten (24, 24') angeordnet ist.

20. Vorrichtung zur Übertragung von Wärme nach wenigstens einem der vorhergegangenen Ansprüche, **dadurch gekennzeichnet, dass** wenigstens eine Komponente wenigstens eine Oberfläche aufweist, deren Struktur zur Veränderung, und insbesondere zur Erhöhung der Turbulenz geeignet ist

21. Vorrichtung zur Übertragung von Wärme nach wenigstens einem der vorangegangenem Ansprüche, **dadurch gekennzeichnet, dass** ein Motor vorgesehen ist, welcher eine Drehung wenigstens der ersten oder der zweiten Komponente um ihre Drehachse bewirkt.

22. Vorrichtung zur Übertragung von Wärme nach wenigstens einem der vorangegangenem Ansprüche, **dadurch gekennzeichnet, dass** die vorgegebene Achse (A) bezüglich wenigstens einer Komponente (6, 6', 6", 7) nicht die Symmetrieachse ist.

23. Vorrichtung zur Übertragung von Wärme nach wenigstens einem der vorhergegangenen Ansprüche, **dadurch gekennzeichnet, dass** zwischen den ersten (26) und/oder zweiten Komponenten (24, 24') Wellrippen (29) oder dergleichen vorgesehen sind.

24. Luftströmungskanal, insbesondere für ein Kraftfahrzeug,
**dadurch gekennzeichnet**, das s
er eine Vorrichtung zur Übertragung von Wärme (1) nach wenigstens einem der vorhergegangenen Ansprüchen aufweist.

25. Luftströmungskanal nach Anspruch, 24 **dadurch gekennzeichnet, dass** die Vorrichtung zur Übertragung von Wärme (1) nach wenigstens einem der vorhergegangenen Ansprüche in einem Ausgangsbereich des Luftströmungskanals angeordnet ist.

## Claims

1. A device for heating the cabin air of a motor vehicle, comprising a first component (6,6',6'') which is connected to an electric voltage source, and the temperature of which is changeable depending on a current flowing through the component (6,6',6'') ; and a second component (7) for holding the first component (6,6',6''), which is connected to the first component (6,6',6''), wherein the first component (6,6',6") is movably disposed such that moving the first component (6, 6',6'') enables the flow direction of a medium (P) flowing inside the device to be changed, at least partially, wherein the first component (6,6',6'') and the second component (7) are rotatable about a predefined axis (A), wherein the first component (6,6',6'') is rotatable in at least two positions,
**characterized in that**, in one position, the medium (P) can be prevented from passing through the device (1), wherein the first component (6, 6', 6'') and the second component (7) are connected in an electrically conductive manner.

2. The device for transferring heat according to at least one of the preceding claims, **characterized in that** a large number of first and/or second components (7) is provided.

3. The device for transferring heat according to at least one of the preceding claims, **characterized in that** the first (6, 6', 6'') and second components (7) are situated in alternation.

4. The device for transferring heat according to at least one of the preceding claims, **characterized in that** the at least one second component (7) promotes the exchange of heat with a surrounding medium (P), in particular with air.

5. The device for transferring heat according to at least one of the preceding claims, **characterized in that** electric current is applied to the large number of second components (7) in alternation.

6. The device for transferring heat according to at least one of the preceding claims, **characterized in that** at least the first (6, 6', 6") and/or the second to component is rotatable in at least two positions, wherein, in one position, air (P) is substantially prevented from passing through the device (1).

7. The device for transferring heat according to at least one of the preceding claims, **characterized in that** the first component (6, 6', 6'') is rotatable through an angle of 0 degrees to 180 degrees, preferably 0 degrees to 120 degrees, and particularly preferably through an angle of 0 degrees to 90 degrees.

8. The device for transferring heat according to at least one of the preceding claims, **characterized in that** the first (6, 6', 6'') is in the form of an elongated element.

9. The device for transferring heat according to at least one of the preceding claims, **characterized in that** a plurality of first components (6, 6', 6" )is provided in particular as elongated elements - between the second components (7).

10. The device for transferring heat according to at least one of the preceding claims, **characterized in that** the second component (7) or a large number of second components (7) are plate-shaped.

11. The device for transferring heat according to at least one of the preceding claims, **characterized in that** the second components (7) have a substantially circular or semicircular shape.

12. The device for transferring heat according to at least one of the preceding claims, **characterized in that** the rotational axis (A) is simultaneously the symmetry axis (A) for at least the first component (6, 6', 6") and/or the second component (7).

13. The device for transferring heat according to at least one of the preceding claims, **characterized in that** the length of at least one first component (6, 6', 6'') slightly exceeds the diameter of at least one second component (7).

14. The device for transferring heat according to at least one of the preceding claims, **characterized in that** the first component (6, 6', 6'') encloses the second component (7) at least partially.

15. The device for transferring heat according to at least one of the preceding claims, **characterized in that** a holding device (4) is provided which stabilizes the second components (7) with respect to one another.

16. The device for transferring heat according to at least one of the preceding claims, **characterized in that** the holding device (4) is connected as a single piece to at least one first component (6, 6', 6''),preferably to a large number of first components and particularly preferably to substantially first components.

17. The device for transferring heat according to at least one of the preceding claims, **characterised in that** the first component (6, 6',6'') has a substantially plate-shaped structure.

18. The device for transferring heat according to at least one of the preceding claims, **characterized in that** the second (7) has a substantially plate-shaped structure.

19. The device for transferring heat according to at least one of the preceding claims, **characterized in that** a third component (29) is provided, which is preferably disposes between the plurality of second components (24, 24') relative to the rotational axis (A).

20. The device for transferring heat according to at least one of the preceding claims, **characterized in that** at least one component has at least one surface, the structure of which is suitable for changing, in particular increasing, turbulence.

21. The device for transferring heat according to at least one or the preceding claims, **characterized in that** a motor is provided which causes at least the first or the second component to rotate about the rotational axis thereof.

22. The device for transferring heat according to at least one of the preceding claims, **characterised in that** the predefined axis (A) is not the symmetry axis relative to at least one component (6, 6', 6" 7).

23. the device for transferring heat according to at least one of the preceding claims, **characterized in that** corrugated fins (29) or the like are provided between the first (26) and/or second components (24, 24').

24. An air flow duct, in particular for a motor vehicle, **characterized in that** it comprises a device for transferring heat (1) according to at least one of the preceding claims.

25. The air flow duct according to claim 24, **characterized in that** the device for transferring heat (1) according to at least one of the preceding claims is disposed in an outlet region of the air flow duct.

## Revendications

1. Dispositif servant au chauffage de l'air de l'habitacle d'un véhicule automobile, comprenant :
- un premier composant (6, 6', 6") qui est connecté à une source de courant électrique est dont la température est modifiable en fonction d'un flux s'écoulant à travers les composants (6, 6', 6"), et
- un deuxième composant (7) servant au maintien du premier composant (6, 6', 6"), lequel deuxième composant est connecté au premier composant (6, 6', 6") :
où le premier composant (6, 6', 6") est disposé en étant mobile de manière telle, que par un mouvement du premier composant (6, 6', 6''), la direction d'écoulement d'un milieu (P) s'écoulant à l'intérieur du dispositif soit modifiable au moins partiellement
où le premier composant (6, 6', 6") est le deuxième composant (7) peuvent tourner autour d'un axe prédéfini (A) ,
où le premier composant (6, 6', 6") peut tourner dans au moins deux positions,
**caractérisé en ce que**, dans une position, le passage du milieu (P) peut être entravé par le dispositif (1), où le premier composant (6, 6', 6") et le deuxième composant (7) sont connectés en étant électroconducteurs.

2. Dispositif servant au transfert de chaleur selon la revendication 1, **caractérisé en ce qu'**il est prévu une multiplicité de premiers et / ou de deuxièmes composants (7).

3. Dispositif servant au transfert de chaleur selon au moins l'une ou l'autre des revendications précédentes, **caractérisé en ce que** les premiers (6, 6', 6") et les deuxièmes composants (7) sont disposés de façon alternée.

4. Dispositif servant au transfert de chaleur selon au moins l'une quelconque des revendications précédentes, **caractérisé en ce que** le deuxième composant (7) au moins au nombre de un favorise l'échange de chaleur avec un milieu environnant (P), en particulier avec de l'air.

5. Dispositif servant au transfert de chaleur selon au moins l'une quelconque des revendications précédentes, **caractérisé en ce que** la multiplicité des deuxièmes composants (7) est sollicitée, de façon alternée, par un courant électrique.

6. Dispositif servant au transfert de chaleur selon au moins l'une quelconque des revendications précédentes, **caractérisé en ce qu'**au moins le premier (6, 6', 6") et / ou le deuxième (7) composant peut tourner dans au moins deux positions où, dans une position, le passage de l'air (P) est pratiquement entravé par le dispositif (1).

7. Dispositif servant au transfert de chaleur selon au moins l'une quelconque des revendications précédentes, **caractérisé en ce que** le premier composant (6, 6', 6") peut tourner suivant un angle allant de 0) degré à 180 degrés, de préférence de 0 degré à 120 degrés et, de façon particulièrement préférable, suivant un angle allant de 0 degré à 90 degrés.

8. Dispositif servant au transfert de chaleur selon au moins l'une quelconque des revendications précédentes, **caractérisé en ce que** le premier composant (6, 6', 6") est réalisé comme un élément très allongé.

9. Dispositif servant au transfert de chaleur selon au moins l'une quelconque des revendications précédentes, **caractérisé en ce qu'**il est prévu, entre les deuxièmes composants (7), plusieurs premiers composants (6, 6', 6") réalisés en particulier comme des éléments très allongés.

10. Dispositif servant au transfert de chaleur selon au moins l'une quelconque des revendications précédentes, **caractérisé en ce que** le deuxième composant (7) ou la multiplicité des deuxièmes composants (7) sont réalisés en forme de plaque.

11. Dispositif servant au transfert de chaleur selon au moins l'une quelconque des revendications précédentes, **caractérisé en ce que** les deuxièmes composants (7) présentent une forme pratiquement circulaire ou demi-circulaire.

12. Dispositif servant au transfert de chaleur selon au moins l'une quelconque des revendications précédentes, **caractérisé en ce que** l'axe de rotation (A) est en même temps pratiquement l'axe de symétrie (A) pour au moins le premier (6, 6', 6") et / ou le deuxième composant (7).

13. Dispositif servant au transfert de chaleur selon au moins l'une quelconque des revendications précédentes, **caractérisé en ce que** la longueur d'au moins un premier composant (6, 6', 6") est légèrement supérieure au diamètre d'au moins un deuxième composant (7).

14. Dispositif servant au transfert, de chaleur selon au moins l'une quelconque des revendications précédentes, **caractérise en ce que** le premier composant (6, 6', 6") entoure au moins partiellement le deuxième composant (7).

15. Dispositif servant au transfert de chaleur selon au moins l'une quelconque des revendications précédentes, **caractérisé en ce qu'**il est prévu un dispositif de retenue (4) qui stabilise au moins les deuxièmes composants (7), les uns par rapport aux autres.

16. Dispositif servant au transfert de chaleur selon au moins l'une quelconque des revendications précédentes, **caractérisé en ce que** le dispositif de retenue (4) est assemblé en formant une seule et même pièce avec au moins un premier composant (6, 6', 6"), de préférence avec une multiplicité de premiers composants et, de façon particulièrement préférable, avec pratiquement tous les premiers composants.

17. Dispositif servant au transfert de chaleur selon au moins l'une quelconque des revendications précédentes, **caractérisé en ce que** le premier composant (6, 6', 6") présente une structure pratiquement en forme de disque.

18. Dispositif servant au transfert de chaleur selon au moins l'une quelconque des revendications précédentes, **caractérisé en ce que** le deuxième composant (7) présente une structure pratiquement en forme de plaque.

19. Dispositif servant au transfert de chaleur selon au moins l'une quelconque des revendications précédentes, **caractérisé en ce qu'**il est prévu un troisième composant (29) qui, par rapport à l'axe de rotation (A), est disposé de préférence entre plusieurs deuxièmes composants (24, 24').

20. Dispositif servant au transfert de chaleur salon au moins l'une quelconque des revendications précédentes, **caractérisé en ce qu'**au moins un composant présente au moins une surface dont la structure est appropriée pour la modification et, en particulier pour l'augmentation de la turbulence.

21. Dispositif servant au transfert de chaleur selon au moins l'une quelconque des revendications précédentes, **caractérisé en ce qu'**il est prévu un moteur qui produit une rotation au moins du premier ou du deuxième composant, autour de son axe de rotation.

22. Dispositif servant au transfert de chaleur selon au moins l'une quelconque des revendications précédentes, **caractérisé en ce que** l'axe prédéfini (A) n'est pas l'axe de symétrie par rapport au moins à un composant (6, 6', 6", 7).

23. Dispositif servant au transfert de chaleur selon au moins l'une quelconque des revendications précédentes, **caractérisé en ce qu'**il est prévu des ailettes ondulées (29) ou des éléments analogues, entre les premiers (26) et / ou les deuxièmes composants (24, 24').

24. Conduit d'écoulement d'air, / et particulier pour un véhicule automobile, **caractérisé en ce que** le conduit d'écoulement d'air présente un dispositif servant au transfert de chaleur (1) selon au moins l'une quelconque des revendications précédentes.

25. Conduit d'écoulement d'air selon la revendication 24, **caractérisé en ce que** le dispositif servant au transfert de chaleur (1) selon au moins l'une quelconque des revendications précédentes est disposé dans une zone de sortie du conduit d'écoulement d'air.
